# EUROPÄISCHE PATENTSCHRIFT

(11) **EP 4 487 029 B1**
(45) Veröffentlichungstag und Bekanntmachung des Hinweises auf die Patenterteilung: **28.01.2026**
(21) Anmeldenummer: 23709622.7
(22) Anmeldetag: 02.03.2023
(51) Int. Cl.: F16F 9/02, F16F 9/52, F16F 9/36

(54) **GASDRUCKFEDER MIT TEMPERATURAUSGLEICH, VERFAHREN ZUR HERSTELLUNG DER GASDRUCKFEDER**
GAS PRESSURE SPRING WITH TEMPERATURE COMPENSATION, AND METHOD FOR PRODUCING THE GAS PRESSURE SPRING
RESSORT PNEUMATIQUE À COMPENSATION DE TEMPÉRATURE, ET PROCÉDÉ DE PRODUCTION DU RESSORT PNEUMATIQUE

(30) Priorität: 03.03.2022 DE 102022104997
(43) Veröffentlichungstag der Anmeldung: 08.01.2025
(73) Patentinhaber: STABILUS GmbH, 56070 Koblenz (DE)
(72) Erfinder: PROBST, Ulrich, 56204 Hillscheid (DE); REISER, Alexander, 56294 Münstermaifeld (DE); BEIB, Felix, 56070 Koblenz (DE); UNKELBACH, Nico, 56584 Rüscheid (DE)
(74) Vertreter: Höer, Daniela
(86) Internationale Anmeldenummer: PCT/EP2023/055351
(87) Internationale Veröffentlichungsnummer: WO 2023/166134

(56) Entgegenhaltungen:
- EP-A2- 1 795 777
- US-A1- 2004 262 107

## Beschreibung

### Technisches Gebiet

Die Erfindung betrifft eine Gasdruckfeder gemäß dem Oberbegriff des Anspruchs 1 und ein Verfahren zur Herstellung der Gasdruckfeder.

### Stand der Technik

Aus dem Stand der Technik, sind Gasdruckfedern bekannt, bei denen eine Temperaturabhängigkeit der Federkraft durch ein Ausgleichsmedium ausgeglichen werden soll.

Die Druckschrift EP 1 795 777 A2 beschreibt eine Gasfeder mit einem Arbeitszylinder, in dem ein Arbeitskolben verschiebbar geführt ist. Der zwischen dem Arbeitszylinder und einem Ausgleichszylinder gebildete Ringraum ist mit einem Ausgleichsmedium gefüllt, das sich bei Temperaturerhöhung ausdehnt. Das einem Kolbenaustrittsende entgegengesetzte, offene Ende des Arbeitszylinders ist mittels eines topfförmigen Ausgleichskolbens verschlossen. Wenn sich das Ausgleichsmedium ausdehnt, verschiebt es den Ausgleichskolben so, dass sich das Volumen des Arbeitszylinders vergrößert.

Die Druckschrift DE 31 41 295 A1 betrifft eine Gasfeder, die aus einem Behälter besteht, an dessen Innenwand ein mit der Kolbenstange verbundener Kolben gleitet. Ein mit Ausdehnungsstoff gefüllter Raum befindet sich zwischen einer behälterfesten Trennwand und einem Scheibenkolben, wobei dieser Scheibenkolben eine bewegliche Trennwand für den mit Ausdehnungsstoff gefüllten Raum darstellt. Die Gasfeder umfasst ferner einen Arbeitsraum mit einer unter Druck stehenden Gasfüllung. Bei Temperaturerhöhung dehnt sich der Ausdehnungsstoff aus und bewirkt, dass sich der Scheibenkolben von der behälterfesten Trennwand weiter entfernt, wodurch der Arbeitsraum vergrößert wird.

Bekannte Gasdruckfedern mit Temperaturausgleich sind in der Regel kompliziert aufgebaut, beanspruchen einen deutlich größeren Bauraum als Gasdruckfedern ohne Temperaturausgleich oder können die Temperaturabhängigkeit nicht über den ganzen anwendungsrelevanten Temperaturbereich ausgleichen.

### Technische Aufgabe

Die Aufgabe der Erfindung ist es, eine kostengünstige und einfach aufgebaute Gasdruckfeder und ein kostengünstiges und zuverlässiges Verfahren zu deren Herstellung zu schaffen, wobei die Federkraft der Gasdruckfeder über einen möglichst weiten Temperaturbereich von der Temperatur unabhängig ist.

### Technische Lösung

Die vorliegende Erfindung stellt eine Gasdruckfeder gemäß Anspruch 1 bereit, die die technische Aufgabe löst. Ebenso wird die Aufgabe durch ein Verfahren zur Herstellung der Gasdruckfeder gemäß Anspruch 13 gelöst. Vorteilhafte Ausgestaltungen ergeben sich aus den abhängigen Ansprüchen.

Die Gasdruckfeder umfasst einen in einem Arbeitszylinder entlang einer Hubachse über einen Hubbereich verschieblich geführten Arbeitskolben. Der Arbeitskolben ist vorzugsweise relativ zu dem Arbeitszylinder entlang der Hubachse verschieblich. Der Arbeitszylinder ist vorzugsweise hohlzylindrisch geformt und/oder koaxial zur Hubachse angeordnet.

Die Gasdruckfeder umfasst einen den Arbeitszylinder radial zur Hubachse umschließenden Ausgleichszylinder. Der Ausgleichszylinder ist vorzugsweise hohlzylindrisch geformt und/oder koaxial zur Hubachse angeordnet. Der Ausgleichszylinder ist vorzugsweise starr an dem Arbeitszylinder befestigt.

Die Gasdruckfeder umfasst einen in dem Ausgleichszylinder entlang der Hubachse verschieblich geführten und hohlzylindrisch geformten Ausgleichskolben. Der Ausgleichskolben ist vorzugsweise koaxial zur Hubachse angeordnet. Der Ausgleichskolben ist vorzugsweise relativ zu dem Ausgleichszylinder und zu dem Arbeitszylinder entlang der Hubachse verschieblich.

Der Arbeitszylinder weist entlang der Hubachse ein offenes Ende auf. "Offen" bedeutet zumindest, dass ein Gas durch das offene Ende ungehindert aus dem Arbeitszylinder austreten und in den Arbeitszylinder eintreten kann. Vorzugsweise ist das offene Ende vollständig offen.

An einem dem offenen Ende entlang der Hubachse gegenüberliegenden Kolbenstangen-Ende des Arbeitszylinders ist vorzugsweise eine an dem Arbeitskolben befestigte Kolbenstange durch eine Dichtvorrichtung aus dem Arbeitszylinder herausgeführt. Durch die Dichtvorrichtung ist das Kolbenstangen-Ende vorzugsweise für ein Gas geschlossen. "Geschlossen" bedeutet, dass am Kolbenstangen-Ende kein Gas aus dem Arbeitszylinder austreten oder in den Arbeitszylinder eintreten kann.

Gemäß einer auch unabhängig von den übrigen Merkmalen der Erfindung für gattungsgemäße Gasdruckfedern vorteilhaften Ausgestaltung des Arbeitszylinders, weist der Arbeitszylinder vorzugsweise in einem Dichtbereich zwischen dem Hubbereich und dem Kolbenstangen-Ende des Arbeitszylinders, an dem die Kolbenstange aus dem Arbeitszylinder austritt, einen radial zur Hubachse gemessenen Dichtbereich-Außendurchmesser auf, der größer ist als der Hubbereichs-Außendurchmesser des Arbeitszylinders. Der Dichtbereichs-Außendurchmesser beträgt beispielsweise 18 mm bis 21 mm und ist vorzugsweise über den Dichtbereich konstant.

Durch den vergrößerten Dichtbereich-Außendurchmesser kann auch bei einem großen Durchmesser der Kolbenstange von beispielsweise 10 mm die Dichtvorrichtung in dem Arbeitszylinder, insbesondere vollständig in dem Arbeitszylinder, angeordnet und gehalten werden. Dadurch ist kein separates Halteelement zur Halterung der Dichtvorrichtung notwendig. Das Halteelement könnte beispielsweise eine in das Kolbenstangen-Ende des Arbeitszylinders eingesteckten Hülse, insbesondere eine Aluminium-Hülse, sein. Folglich ist die Gasdruckfeder besonders einfach und kostengünstig herstellbar.

Der Ausgleichszylinder bildet an dem offenen Ende einen Überstand über den Arbeitszylinder mit einem geschlossenen Ende entlang der Hubachse.

An einem dem geschlossenen Ende entlang der Hubachse gegenüberliegenden Kolbenstangen-Ende des Ausgleichszylinders ist vorzugsweise die Kolbenstange der Gasdruckfeder durch eine Dichtvorrichtung aus dem Ausgleichszylinder herausgeführt. Durch die Dichtvorrichtung ist das Kolbenstangen-Ende vorzugsweise für ein Gas geschlossen.

Der Ausgleichskolben trennt einen in dem Arbeitszylinder angeordneten Arbeitsraum, einen zwischen dem Arbeitszylinder und dem Ausgleichszylinder angeordneten Ausgleichsraum und einen in dem Überstand angeordneten Rückstellraum, vorzugsweise gasdicht, voneinander.

Der Ausgleichskolben weist vorzugsweise an einer dem Rückstellraum zugewandten Unterseite des Ausgleichskolbens einen Zylinderboden auf. Der Zylinderboden ist vorzugsweise senkrecht zur Hubachse ausgerichtet und/oder geschlossen.

Der Ausgleichskolben umfasst vorzugsweise einen abschnittsweise zwischen dem Arbeitszylinder und dem Ausgleichszylinder angeordneten Zylindermantel. Der Zylindermantel läuft vorzugsweise um die Hubachse um und/oder ist geschlossenen. Eine Anordnung des Zylindermantels abschnittsweise zwischen dem Arbeitszylinder und dem Ausgleichszylinder hat den Vorteil, dass eine Baulänge der Gasdruckfeder reduziert ist.

Der Ausgleichskolben ist an einer dem Arbeitsraum zugewandten Oberseite des Ausgleichskolbens offen. Daraus ergibt sich der Vorteil, dass das Innere des Ausgleichskolbens als Teil des Arbeitsraums dient, sodass die Gasdruckfeder besonders kompakt aufgebaut ist.

Der Ausgleichskolben ist vorzugsweise topfförmig, wobei der Zylinderboden einem Topfboden entspricht und der Zylindermantel einer Topfwand.

Ein hohlzylindrischer oder topfförmiger Ausgleichskolben hat den Vorteil, dass er den Arbeitsraum, den Ausgleichsraum und den Rückstellraum mit besonders geringem Materialbedarf voneinander trennen kann.

In dem Ausgleichsraum ist vorzugsweise ein Ausgleichsmedium angeordnet, das den Ausgleichskolben bei Erwärmung des Ausgleichsmediums auf das geschlossene Ende zu verschiebt.

Das Ausgleichsmedium umfasst vorzugsweise einen Dehnstoff, insbesondere ein Dehnwachs, besonders bevorzugt ein Gemisch aus einem Dehnwachs und einem Öl. Das Ausgleichsmedium kann insbesondere aus dem Dehnstoff, dem Dehnwachs oder dem Gemisch aus Dehnwachs und Öl bestehen. Das Ausgleichsmedium kann beispielsweise so ausgestaltet sein wie das in der Druckschrift EP 1 795 777 A2 beschriebene Ausgleichsmedium. Das Dehnwachs kann beispielsweise so ausgestaltet sein wie das in der Anmeldung DE 10 2020 113 749 beschriebene Dehnwachs. Ein Druck des Ausgleichsmediums beträgt beispielsweise von 70 bar bis 350 bar.

In dem Rückstellraum ist vorzugsweise ein Rückstellmittel angeordnet, das den Ausgleichskolben bei Abkühlung des Ausgleichsmediums von dem geschlossenen Ende weg verschiebt.

Das Rückstellmittel umfasst oder ist vorzugsweise ein Rückstellgas, wobei das Rückstellgas bevorzugt das gleiche Gas ist, das als Arbeitsgas den Arbeitsraum füllt. Das Rückstellgas und/oder das Arbeitsgas ist beispielsweise Stickstoff. Das Rückstellmittel kann ein mechanisches Rückstellelement, beispielsweise eine Feder, insbesondere eine Schraubendruckfeder, umfassen oder davon gebildet sein.

Ein Gasdruck des Arbeitsgases beträgt beispielsweise von 20 bar bis 250 bar. Ein Gasdruck des Rückstellgases beträgt beispielsweise von 20 bar bis 350 bar.

Die Gasdruckfeder umfasst eine, insbesondere genau eine, an, insbesondere auf, der Oberseite des Ausgleichskolbens angeordnete, vorzugsweise mit dem Ausgleichskolben entlang der Hubachse verschiebliche, Dichtung, die den Ausgleichskolben zum Arbeitszylinder und zum Ausgleichszylinder abdichtet, insbesondere gasdicht abdichtet.

Bei bisher bekannten Gasdruckfedern mit Temperaturkompensation, beispielsweise gemäß EP 1 795 777 A2, sind mindestens zwei Dichtungen notwendig, um einen Ausgleichskolben zu einem Arbeitszylinder und einem Ausgleichszylinder abzudichten. Die erfindungsgemäße Abdichtung zu Arbeitszylinder und Ausgleichszylinder mit einer einzigen Dichtung führt zu einer wesentlich einfacheren und kostengünstigeren Herstellung der Gasdruckfeder und reduziert mögliche Leckstellen, sodass ein zuverlässiger Betrieb der Gasdruckfeder über eine lange Lebensdauer möglich ist.

Damit die Dichtung sowohl zum Arbeitszylinder als auch zum Ausgleichszylinder abdichten kann, muss sie an der Oberseite des Ausgleichszylinders angeordnet sein. Eine Anordnung der Dichtung an der Oberseite des Ausgleichskolbens erscheint ausgehend vom Stand der Technik nicht erfolgversprechend, weil an der offenen Oberseite nur eine schmale Kontaktfläche zur Verfügung steht, um die Dichtung an dem Ausgleichskolben zu befestigen.

Versuche haben jedoch überraschend gezeigt, dass es nicht notwendig ist, die Dichtung an dem Ausgleichskolben zu befestigen. Tatsächlich wird die Dichtung im Betrieb der Gasdruckfeder durch den Druck des Ausgleichsmediums ausreichend stark an den Ausgleichskolben gepresst, damit sie ihre Dichtfunktion zuverlässig erfüllt.

Vorteilhafterweise ist die Dichtung nicht an dem Ausgleichskolben, insbesondere weder an dem Ausgleichskolben noch an dem Ausgleichszylinder oder dem Arbeitszylinder, befestigt. Dadurch kann die Gasdruckfeder besonders einfach und kostengünstig hergestellt werden.

### Beschreibung der Ausführungsarten

Der Ausgleichskolben ist vorzugsweise ausschließlich durch die Dichtung zum Arbeitszylinder und zum Ausgleichszylinder abgedichtet. Die Gasdruckfeder umfasst also keine weiteren Dichtungen zwischen Arbeitszylinder, Ausgleichskolben und Ausgleichszylinder und ist somit besonders einfach aufgebaut. Die Dichtung ist vorzugsweise einstückig.

Die Dichtung umfasst vorzugsweise einen um die Hubachse umlaufenden Dichtring, beispielsweise einen O-Ring. Besonders bevorzugt ist die Dichtung ein um die Hubachse umlaufender Dichtring.

Die Dichtung umfasst vorzugsweise ein Polyurethan und/oder einen Acrylnitril-Butadien-Kautschuk oder besteht daraus. Acrylnitril-Butadien-Kautschuk hat den besonderen Vorteil, dass zwischen der Dichtung und dem Ausgleichszylinder nur geringe Reibkräfte auftreten.

Der Ausgleichskolben ist vorzugsweise einstückig und beispielsweise durch Umformung aus einem Ausgleichskolbenrohling erhältlich. Ein einstückiger Ausgleichskolben hat die Vorteile, dass die Herstellung der Gasdruckfeder vereinfacht ist, und dass der Ausgleichskolben keine Verbindungsstellen enthält, die Leckagen bilden könnten.

Der Ausgleichskolben umfasst vorzugsweise Aluminium oder einen Kunststoff oder besteht aus Aluminium oder einem Kunststoff. Aus den genannten Materialien kann ein besonders leichter und kostengünstiger Ausgleichskolben hergestellt werden. Durch die erfindungsgemäße Form und Anordnung des Ausgleichskolbens ist er auch bei Verwendung der genannten Materialien trotz der hohen in der Gasdruckfeder herrschenden Drücke stabil.

Die Gasdruckfeder umfasst vorzugsweise ein Führungselement, das den Ausgleichskolben relativ zum Ausgleichszylinder entlang der Hubachse verschieblich führt, wobei das Führungselement bevorzugt eine in dem Überstand zwischen dem Ausgleichszylinder und dem Ausgleichskolben, insbesondere koaxial zur Hubachse, angeordnete Führungshülse umfasst. Das Führungselement kann an dem Ausgleichskolben oder an dem Ausgleichszylinder befestigt sein. Das Führungselement kann beispielsweise einstückig mit dem Ausgleichskolben oder dem Ausgleichszylinder sein. Das Führungselement kann beispielsweise einen Führungsring, insbesondere aus Kunststoff, umfassen, der insbesondere mit einer Rastverbindung auf dem Ausgleichskolben befestigt sein kann. Das Führungselement verhindert vorteilhafterweise ein Verkippen des Ausgleichskolbens relativ zu dem Arbeitszylinder und zu dem Ausgleichszylinder. Ein Verkippen könnte die Dichtfunktion der Dichtung an dem Ausgleichskolben beeinträchtigen.

Der Ausgleichskolben umfasst vorzugsweise eine, bevorzugt an die Oberseite angrenzende, radial zur Hubachse über den Zylindermantel überstehende Zylinderkrempe, wobei die Dichtung an der Zylinderkrempe angeordnet ist. Die Zylinderkrempe bietet eine vergrößerte Kontaktfläche zwischen der Dichtung und dem Ausgleichskolben, sodass die Dichtung ihre Dichtfunktion besonders zuverlässig erfüllt. Außerdem kann die Dichtung zuverlässiger mit dem Ausgleichskolben zusammen entlang der Hubachse verschoben und gegebenenfalls an dem Ausgleichskolben befestigt werden.

Vorzugsweise steht die Zylinderkrempe radial nach außen über den Zylindermantel vor. Dadurch steht ein zum Rückstellraum offener Zwischenraum zwischen dem Zylindermantel und dem Ausgleichszylinder dem Rückstellmittel zur Verfügung, sodass bei gegebener Baulänge der Rückstellraum vergrößert wird. Durch den sich daraus ergebenden geringeren Druck des Rückstellmittels ist die Gasdruckfeder einfacher abzudichten. Um trotzt der radial nach außen vorstehenden Zylinderkrempe ein Verkanten des Ausgleichskolbens in dem Ausgleichszylinder zu vermeiden, umfasst die Gasdruckfeder in dieser Ausgestaltung vorzugsweise das zuvor beschriebene Führungselement. Das Führungselement ist dabei vorzugsweise an dem Ausgleichskolben befestigt oder einstückig damit ausgestaltet, damit das Führungselement und die Zylinderkrempe sich nicht gegenseitig behindern.

Ein radial zur Hubachse gemessener Abstand des Ausgleichszylinders von dem Arbeitszylinder ist vorzugsweise in dem Hubbereich größer als in einem zwischen dem Hubbereich und dem offenen Ende des Arbeitszylinders liegenden Endbereich des Arbeitszylinders.

Der kleinere Abstand im Endbereich bewirkt eine kleinere Querschnittsfläche des Ausgleichsraumes senkrecht zur Hubachse im Endbereich. Dadurch wird der Ausgleichskolben bei einer gegebenen Temperaturerhöhung durch eine Ausdehnung des Ausgleichsmediums weiter zum geschlossenen Ende des Ausgleichszylinders verschoben, sodass der Arbeitsraum stärker vergrößert wird, und eine stärkere Kompensation der Temperaturabhängigkeit der Federkraft der Gasdruckfeder stattfindet.

Da der Abstand im Hubbereich des Arbeitskolbens nicht verkleinert ist, kann der Ausgleichsraum insgesamt noch eine für einen wirksame Temperaturkompensation ausreichende Menge an Ausgleichsmedium aufnehmen.

Der Abstand ist beispielsweise im Endbereich um 10 % bis 50 %, bevorzugt um 20 % bis 40 %, besonders bevorzugt um 30 %, kleiner als im Hubbereich. Der Abstand beträgt beispielsweise im Endbereich 1 mm bis 8 mm, bevorzugt 2 mm bis 4 mm, besonders bevorzugt 2,5 mm. Der Abstand beträgt beispielsweise im Hubbereich 2 mm bis 12 mm, bevorzugt 3 mm bis 6 mm, besonders bevorzugt 3 mm bis 3,5 mm. Mit den genannten Werten des Abstands kann über einen typischen Einsatz-Temperaturbereich der Gasdruckfeder, beispielsweise von -10 °C bis +60 °C, eine weitgehende, insbesondere vollständige, Kompensation der Temperaturabhängigkeit der Federkraft der Gasdruckfeder erreicht werden.

Vorzugsweise ist der Abstand des Ausgleichszylinders von dem Arbeitszylinder in dem Endbereich und/oder in dem Hubbereich jeweils unabhängig von einer Position entlang der Hubachse. Der Abstand ist in dieser Ausgestaltung im Endbereich und/oder im Hubbereich jeweils entlang der Hubachse konstant, wodurch die Gasdruckfeder besonders einfach herstellbar ist.

Ein radial zur Hubachse gemessener Endbereichs-Außendurchmesser des Arbeitszylinders ist in dem Endbereich des Arbeitszylinders vorzugsweise größer als ein radial zur Hubachse gemessener Hubbereichs-Außendurchmesser des Arbeitszylinders in dem Hubbereich. Eine solche Aufweitung des Arbeitszylinders im Endbereich bewirkt einen verringerten Abstand zwischen Arbeitszylinder und Ausgleichszylinder ohne Veränderung des Ausgleichszylinders oder der Form des Arbeitszylinders im Hubbereich. Somit wird der verringerte Abstand mit möglichst wenigen Änderungen gegenüber einer Gasdruckfeder aus dem Stand der Technik erreicht. Die Gasdruckfeder ist damit besonders einfach und kostengünstig, insbesondere unter Verwendung bekannter Komponenten und Verfahren, herstellbar.

Der Endbereichs-Außendurchmesser des Arbeitszylinders beträgt vorzugsweise von 101 % bis 150 %, bevorzugt von 105 % bis 130 %, besonders bevorzugt von 110 % bis 120 %, meist bevorzugt 112 % bis 113 %, des Hubbereichs-Außendurchmessers des Arbeitszylinders. Der Endbereichs-Außendurchmesser beträgt beispielsweise von 15 mm bis 25 mm, bevorzugt von 16 mm bis 22 mm, besonders bevorzugt von 18 mm bis 21 mm. Der Hubbereichs-Außendurchmesser beträgt beispielsweise von 10 mm bis 20 mm, bevorzugt von 15 mm bis 19 mm, besonders bevorzugt 17 mm bis 18 mm. Mit den genannten Werten der Außendurchmesser kann über einen typischen Einsatz-Temperaturbereich der Gasdruckfeder eine weitgehende Kompensation der Temperaturabhängigkeit der Federkraft der Gasdruckfeder erreicht werden.

Vorzugsweise ist der Außendurchmesser des Arbeitszylinders in dem Endbereich und/oder in dem Hubbereich jeweils unabhängig von einer Position entlang der Hubachse. Der Abstand ist in dieser Ausgestaltung im Endbereich und/oder im Hubbereich jeweils entlang der Hubachse konstant, wodurch die Gasdruckfeder besonders einfach herstellbar ist.

Ein radial zur Hubachse gemessener Ausgleichszylinder-Innendurchmesser des Ausgleichszylinders beträgt vorzugsweise von 110 % bis 200 %, bevorzugt von 140 % bis 170 %, besonders bevorzugt von 150 % bis 160 %, meist bevorzugt 155 % bis 157 %, des Hubbereichs-Außendurchmessers des Arbeitszylinders. Der Ausgleichszylinder-Innendurchmesser beträgt beispielsweise von 20 mm bis 30 mm, bevorzugt von 23 mm bis 27 mm, besonders bevorzugt 25 mm. Mit den genannten Werten des Ausgleichszylinder-Innendurchmessers kann über einen typischen Einsatz-Temperaturbereich der Gasdruckfeder eine weitgehende Kompensation der Temperaturabhängigkeit der Federkraft der Gasdruckfeder erreicht werden.

Vorzugsweise ist der Innendurchmesser des Ausgleichszylinders unabhängig von einer Position entlang der Hubachse. Der Innendurchmesser des Ausgleichszylinders ist in dieser Ausgestaltung entlang der Hubachse konstant, wodurch die Gasdruckfeder besonders einfach herstellbar ist.

Der Hubbereich und der Endbereich des Arbeitszylinders sind vorzugsweise einstückig miteinander verbunden. Der Hubbereich und der Endbereich können beispielsweise stoffschlüssig miteinander verbunden, insbesondere miteinander verschweißt, verlötet und/oder verklebt, sein. Der Hubbereich und der Endbereich können beispielsweise formschlüssig und/oder kraftschlüssig miteinander verbunden, insbesondere miteinander verschraubt, verrastet und/oder verklemmt, sein.

Der Arbeitszylinder kann beispielsweise ein Metall, insbesondere einen Stahl, und/oder einen Kunststoff umfassen oder daraus bestehen.

Eine Wandstärke des Arbeitszylinders radial zur Hubachse ist vorzugsweise im Hubbereich und im Endbereich des Arbeitszylinders im Wesentlichen gleich, insbesondere bis auf eine durch eine Aufweitung des Arbeitszylinders im Endbereich bewirkte Verringerung der Wandstärke, beispielsweise bis auf eine Verringerung um bis zu 0,2 mm, gleich, und bevorzugt unabhängig von einer Position entlang der Hubachse. Die Wandstärke des Arbeitszylinders ist in dieser Ausgestaltung entlang der Hubachse konstant, wodurch die Gasdruckfeder besonders einfach herstellbar ist.

Eine Wandstärke des Ausgleichszylinders radial zur Hubachse ist vorzugsweise unabhängig von einer Position entlang der Hubachse. Die Wandstärke des Ausgleichszylinders ist in dieser Ausgestaltung entlang der Hubachse konstant, wodurch die Gasdruckfeder besonders einfach herstellbar ist.

Der Arbeitszylinder und/oder der Ausgleichszylinder umfasst vorzugsweise ein nicht homogen gezogenes Rohr, beispielsweise ein Rohr mit einer Schweißnaht entlang der Hubachse.

Das Verfahren zur Herstellung der Gasdruckfeder umfasst ein Umformen oder eine zerspanende Bearbeitung eines Ausgleichskolbenrohlings zu dem Ausgleichskolben. Der Ausgleichskolben kann beispielsweise durch Tiefziehen eines Ausgleichskolbenrohlings aus Aluminium hergestellt werden.

Das Verfahren umfasst vorzugsweise ein Bereitstellen eines Arbeitszylinderrohlings, vorzugsweise in Form eines nicht homogen gezogenen Rohrs, wobei der Arbeitszylinderrohling hohlzylindrisch geformt ist und einen von einer Position entlang seiner Längsachse unabhängigen Außendurchmesser quer zur Längsachse hat. Der Außendurchmesser ist also entlang der Hubachse konstant. Der Arbeitszylinderrohling kann insbesondere der Arbeitszylinder einer bekannten Gasdruckfeder sein. Der Arbeitszylinderrohling hat vorzugsweise von einem Azimut bezüglich seiner Längsachse abhängige Materialeigenschaften, beispielsweise durch eine Schweißnaht entlang der Längsachse. Ein solcher Arbeitszylinderrohling ist besonders einfach und kostengünstig herstellbar, beispielsweise indem er aus Stahl gezogen und geschweißt wird.

Das Verfahren umfasst vorzugsweise ein Umformen des Arbeitszylinderrohlings zu dem Arbeitszylinder der Gasdruckfeder, wobei das Umformen ein Aufweiten des Außendurchmessers des Arbeitszylinderrohlings in mindestens einem Endbereich des Arbeitszylinderrohlings umfasst.

Das Aufweiten umfasst vorzugsweise ein Einführen eines Dorns in den mindestens einen Endbereich und bevorzugt ein Anordnen einer um die Längsachse umlaufende Hülse um den Endbereich des Arbeitszylinderrohlings vor dem Einführen des Dorns, sodass der Endbereich nach dem Aufweiten an der Hülse anliegt. Dadurch lässt sich vorteilhafterweise der Durchmesser eines Arbeitszylinderrohlings, dessen Materialeigenschaften von einem Azimut bezüglich seiner Längsachse abhängig sind, zu einem von dem Azimut unabhängigen Durchmesser aufweiten.

### Kurze Beschreibung der Zeichnungen

Figur 1 zeigt beispielhaft einen schematischen Längsschnitt entlang der Hubachse einer erfindungsgemäßen Ausgestaltung der Gasdruckfeder.
Figur 2 zeigt beispielhaft einen schematischen Längsschnitt entlang der Hubachse einer weiteren erfindungsgemäßen Ausgestaltung der Gasdruckfeder.

### Fig.1

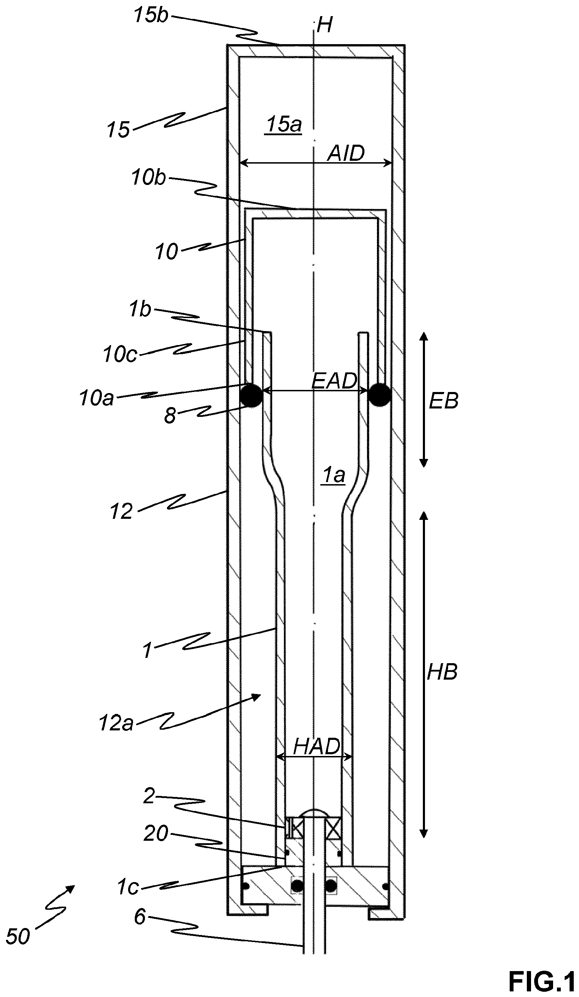

Figur 1 zeigt einen schematischen Längsschnitt entlang der Hubachse H einer erfindungsgemäßen Ausgestaltung der Gasdruckfeder 50.

Die gezeigte Gasdruckfeder 50 umfasst einen in einem Arbeitszylinder 1 entlang einer Hubachse H über einen Hubbereich HB verschieblich geführten Arbeitskolben 2, einen den Arbeitszylinder 1 radial zur Hubachse H umschließenden Ausgleichszylinder 12, und einen in dem Ausgleichszylinder 12 entlang der Hubachse H relativ zu dem Arbeitszylinder 1 und dem Ausgleichszylinder 12 verschieblich geführten und hohlzylindrisch geformten Ausgleichskolben 10.

Der Arbeitszylinder 1 weist entlang der Hubachse H ein offenes Ende 1b auf, wobei der Ausgleichszylinder 12 an dem offenen Ende 1b einen Überstand 15 über den Arbeitszylinder 1 mit einem geschlossenen Ende 15b entlang der Hubachse H bildet.

Der Ausgleichskolben 10 trennt einen in dem Arbeitszylinder 1 angeordneten Arbeitsraum 1a, einen zwischen dem Arbeitszylinder 1 und dem Ausgleichszylinder 12 angeordneten Ausgleichsraum 12a und einen in dem Überstand 15 angeordneten Rückstellraum 15a voneinander.

Der Ausgleichskolben 10 umfasst an einer dem Rückstellraum 15a zugewandten Unterseite des Ausgleichskolbens 10 einen Zylinderboden 10b und einen abschnittsweise zwischen dem Arbeitszylinder 1 und dem Ausgleichszylinder 12 angeordneten Zylindermantel 10c. Der Ausgleichskolben 10 ist an einer dem Arbeitsraum 1a zugewandten Oberseite 10a des Ausgleichskolbens 10 offen.

Die Gasdruckfeder 50 umfasst eine an der Oberseite 10a des Ausgleichskolbens 10 angeordnete Dichtung 8, beispielsweise einen zur Hubachse H konzentrischen Dichtring. Die Dichtung 8 dichtet den Ausgleichskolben 10 zum Arbeitszylinder 1 und zum Ausgleichszylinder 12 ab.

An einem dem offenen Ende 1b entlang der Hubachse H gegenüberliegenden Kolbenstangen-Ende 1c des Arbeitszylinders 1 ist vorzugsweise eine an dem Arbeitskolben 2 befestigte Kolbenstange 6 durch eine Dichtvorrichtung 20 aus dem Arbeitszylinder 1 herausgeführt.

In der in Figur 1 gezeigten Ausgestaltung ist ein radial zur Hubachse H gemessener Abstand des Ausgleichszylinders 12 von dem Arbeitszylinder 1 in dem Hubbereich HB größer ist als in einem zwischen dem Hubbereich HB und dem offenen Ende 1b des Arbeitszylinders 1 liegenden Endbereich EB des Arbeitszylinders 1.

Der im Endbereich EB verkleinerte Abstand kommt in dieser Ausgestaltung dadurch zustande, dass ein radial zur Hubachse H gemessener Endbereichs-Außendurchmesser EAD des Arbeitszylinders 1 größer ist als ein radial zur Hubachse H gemessener Hubbereichs-Außendurchmesser HAD des Arbeitszylinders 1 in dem Hubbereich HB. Der Endbereichs-Außendurchmesser EAD beträgt beispielsweise 18 mm bis 21 mm und ist vorzugsweise über den Endbereich EB konstant. Der Hubbereichs-Außendurchmesser HAD beträgt beispielsweise 17 mm bis 18 mm und ist vorzugsweise über den Hubbereich HB konstant.

Ein Ausgleichszylinder-Innendurchmesser AID des Ausgleichszylinders 12 beträgt beispielsweise 25 mm und ist vorzugsweise entlang der Hubachse H konstant.

### Fig.2

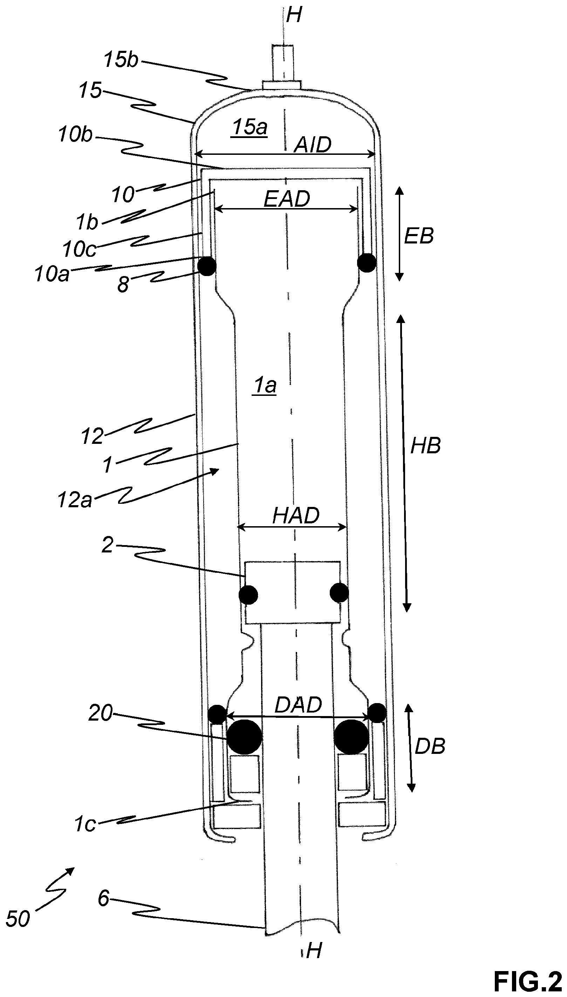

Figur 2 zeigt einen schematischen Längsschnitt entlang der Hubachse H einer weiteren erfindungsgemäßen Ausgestaltung der Gasdruckfeder 50.

Die in Figur 2 gezeigte Gasdruckfeder 50 unterscheidet sich von der in Figur 1 gezeigten Gasdruckfeder 50 darin, dass der Arbeitszylinder 1 in einem Dichtbereich DB zwischen dem Hubbereich HB und dem Kolbenstangen-Ende 1c des Arbeitszylinders 1, an dem die Kolbenstange 6 aus dem Arbeitszylinder 1 austritt, einen radial zur Hubachse H gemessenen Dichtbereich-Außendurchmesser DAD aufweist, der größer ist als der Hubbereichs-Außendurchmesser HAD des Arbeitszylinders 1. Der Dichtbereichs-Außendurchmesser DAD beträgt beispielsweise 18 mm bis 21 mm und ist vorzugsweise über den Dichtbereich DB konstant.

**Liste der Bezugszeichen**

| | | | |
|---|---|---|---|
| 1 | Arbeitszylinder | 15 | Überstand |
| 1a | Innerer Arbeitsraum | 15a | Rückstellraum |
| 1b | offenes Ende | 15b | geschlossenes Ende |
| 1c | Kolbenstangen-Ende | 18 | Führungselement |
| 2 | Arbeitskolben | 20 | Dichtvorrichtung |
| 6 | Kolbenstange | 50 | Gasdruckfeder |
| 8 | Dichtung | AID | Ausgleichszylinder-Innendurchmesser |
| 10 | Ausgleichskolben | DAD | Dichtbereichs-Außendurchmesser |
| 10a | Oberseite | DB | Dichtbereich |
| 10b | Zylinderboden | EAD | Endbereichs-Außendurchmesser |
| 10c | Zylindermantel | EB | Endbereich |
| 10d | Zylinderkrempe | H | Hubachse |
| 12 | Ausgleichszylinder | HAD | Hubbereichs-Außendurchmesser |
| 12a | Ausgleichsraum | HB | Hubbereich |

## Patentansprüche

1. Gasdruckfeder (50), umfassend
a. einen in einem Arbeitszylinder (1) entlang einer Hubachse (H) über einen Hubbereich (HB) verschieblich geführten Arbeitskolben (2),
b. einen den Arbeitszylinder (1) radial zur Hubachse (H) umschließenden Ausgleichszylinder (12), und
c. einen in dem Ausgleichszylinder (12) entlang der Hubachse (H) verschieblich geführten und hohlzylindrisch geformten Ausgleichskolben (10),
d. wobei der Arbeitszylinder (1) entlang der Hubachse (H) ein offenes Ende (1b) aufweist,
e. wobei der Ausgleichszylinder (12) an dem offenen Ende (1b) einen Überstand (15) über den Arbeitszylinder (1) mit einem geschlossenen Ende (15b) entlang der Hubachse (H) bildet,
f. wobei der Ausgleichskolben (10)
i. einen in dem Arbeitszylinder (1) angeordneten Arbeitsraum (1a), einen zwischen dem Arbeitszylinder (1) und dem Ausgleichszylinder (12) angeordneten Ausgleichsraum (12a) und einen in dem Überstand (15) angeordneten Rückstellraum (15a) gasdicht voneinander trennt, und
ii. an einer dem Arbeitsraum (1a) zugewandten Oberseite (10a) des Ausgleichskolbens (10) offen ist,
**gekennzeichnet durch**
g. eine an der Oberseite (10a) des Ausgleichskolbens (10) angeordnete Dichtung (8), die den Ausgleichskolben (10) zum Arbeitszylinder (1) und zum Ausgleichszylinder (12) abdichtet.

2. Gasdruckfeder (50) nach Anspruch 1,
**dadurch gekennzeichnet, dass**
der Ausgleichskolben (10) ausschließlich durch die Dichtung (8) zum Arbeitszylinder (1) und zum Ausgleichszylinder (12) abgedichtet ist.

3. Gasdruckfeder (50) nach Anspruch 1 oder 2,
**dadurch gekennzeichnet, dass**
die Dichtung (8) einen um die Hubachse (H) umlaufenden Dichtring umfasst, bevorzugt ein um die Hubachse (H) umlaufender Dichtring ist.

4. Gasdruckfeder (50) nach einem der Ansprüche 1 bis 3,
**dadurch gekennzeichnet, dass**
die Dichtung (8) ein Polyurethan und/oder einen Acrylnitril-Butadien-Kautschuk umfasst, bevorzugt aus einem Polyurethan oder einem Acrylnitril-Butadien-Kautschuk besteht.

5. Gasdruckfeder (50) nach einem der Ansprüche 1 bis 4,
**dadurch gekennzeichnet, dass**
der Ausgleichskolben (10) einstückig ist.

6. Gasdruckfeder (50) nach einem der Ansprüche 1 bis 5,
**dadurch gekennzeichnet, dass**
der Ausgleichskolben (10) Aluminium oder einen Kunststoff umfasst, bevorzugt aus Aluminium oder aus einem Kunststoff besteht.

7. Gasdruckfeder (50) nach einem der Ansprüche 1 bis 6,
**gekennzeichnet durch**
ein Führungselement (18), das den Ausgleichskolben (10) relativ zum Ausgleichszylinder (12) entlang der Hubachse (H) verschieblich führt, wobei das Führungselement (18) bevorzugt eine in dem Überstand (15) zwischen dem Ausgleichszylinder (12) und dem Ausgleichskolben (10) angeordnete Führungshülse umfasst.

8. Gasdruckfeder (50) nach einem der Ansprüche 1 bis 7,
**dadurch gekennzeichnet, dass**
a. der Ausgleichskolben (10) einen abschnittsweise zwischen dem Arbeitszylinder (1) und dem Ausgleichszylinder angeordneten Zylindermantel (10c) umfasst,
b. wobei der Ausgleichskolben (10) eine an die Oberseite (10a) angrenzende radial zur Hubachse (H) über den Zylindermantel (10c) überstehende Zylinderkrempe (10d) umfasst,
c. wobei die Dichtung (8) an der Zylinderkrempe (10d) angeordnet ist.

9. Gasdruckfeder (50) nach einem der Ansprüche 1 bis 8,
**dadurch gekennzeichnet, dass**
ein radial zur Hubachse (H) gemessener Abstand des Ausgleichszylinders (12) von dem Arbeitszylinder (1) in dem Hubbereich (HB) größer ist als in einem zwischen dem Hubbereich (HB) und dem offenen Ende (1b) des Arbeitszylinders (1) liegenden Endbereich (EB) des Arbeitszylinders (1).

10. Gasdruckfeder (50) nach Anspruch 9,
**dadurch gekennzeichnet, dass**
ein radial zur Hubachse (H) gemessener Endbereichs-Außendurchmesser (EAD) des Arbeitszylinders (1) größer ist als ein radial zur Hubachse (H) gemessener Hubbereichs-Außendurchmesser (HAD) des Arbeitszylinders (1) in dem Hubbereich (HB).

11. Gasdruckfeder (50) nach einem der Ansprüche 9 bis 10,
**dadurch gekennzeichnet, dass**
der Hubbereich (HB) und der Endbereich (EB) des Arbeitszylinders (1) einstückig miteinander verbunden sind.

12. Gasdruckfeder (50) nach einem der Ansprüche 1 bis 11,
**dadurch gekennzeichnet, dass**
der Arbeitszylinder (1) in einem Dichtbereich (DB) zwischen dem Hubbereich (HB) und einem dem offenen Ende (1b) entlang der Hubachse (H) gegenüberliegenden Kolbenstangen-Ende (1c) des Arbeitszylinders (1), an dem eine an dem Arbeitskolben (2) befestigte Kolbenstange (6) aus dem Arbeitszylinder (1) austritt, einen radial zur Hubachse (H) gemessenen Dichtbereich-Außendurchmesser (DAD) aufweist, der größer ist als der Hubbereichs-Außendurchmesser (HAD) des Arbeitszylinders (1).

13. Verfahren zur Herstellung der Gasdruckfeder (50) nach einem der Ansprüche 1 bis 12,
**gekennzeichnet durch den Schritt:**
Umformen oder zerspanendes Bearbeiten eines Ausgleichskolbenrohlings zu dem Ausgleichskolben (10).

14. Verfahren nach Anspruch 13,
**gekennzeichnet durch die Schritte:**
a. Bereitstellen eines Arbeitszylinderrohlings, wobei der Arbeitszylinderrohling hohlzylindrisch geformt ist und einen von einer Position entlang seiner Längsachse unabhängigen Außendurchmesser quer zur Längsachse hat, und
b. Umformen des Arbeitszylinderrohlings zu dem Arbeitszylinder (1) der Gasdruckfeder (50),
c. wobei das Umformen ein Aufweiten des Außendurchmessers des Arbeitszylinderrohlings in mindestens einem Endbereich des Arbeitszylinderrohlings umfasst.

15. Verfahren nach Anspruch 14,
**dadurch gekennzeichnet, dass**
das Aufweiten ein Einführen eines Dorns in den mindestens einen Endbereich und bevorzugt ein Anordnen einer um die Längsachse umlaufende Hülse um den Endbereich vor dem Einführen des Dorns umfasst, sodass der Endbereich nach dem Aufweiten an der Hülse anliegt.

## Claims

1. Gas pressure spring (50) comprising:
a. a working piston (2) movably guided in a working cylinder (1) along a stroke axis (H) over a stroke region (HB),
b. a compensating cylinder (12) enclosing the working cylinder (1) radially to the stroke axis (H), and
c. a compensating piston (10), hollow cylindrical in shape, which is movably guided in the compensating cylinder (12) along the stroke axis (H),
d. the working cylinder (1) comprising an open end (1b) along the stroke axis (H),
e. the compensating cylinder (12) forming, at the open end (1b), a projection (15) over the working cylinder (1) that has a closed end (15b) along the stroke axis (H),
f. the compensating piston (10)
i. separating from each other, in a gas-tight manner, a working chamber (1a) arranged in the working cylinder (1), a compensation chamber (12a) arranged between the working cylinder (1) and the compensation cylinder (12), and a resetting chamber (15a) arranged in the projection (15), and
ii. being open at an upper side (10a) of the compensating piston (10) facing the working chamber (1a),
**characterized by**
g. a seal (8) arranged on the upper side (10a) of the compensating piston (10), which seals the compensating piston (10) from the working cylinder (1) and from the compensating cylinder (12).

2. Gas pressure spring (50) according to claim 1,
**characterized in that**
the compensating piston (10) is sealed exclusively by the seal (8) from the working cylinder (1) and from the compensating cylinder (12).

3. Gas pressure spring (50) according to claim 1 or claim 2,
**characterized in that**
the seal (8) comprises a sealing ring running around the stroke axis (H), preferably is a sealing ring running around the stroke axis (H).

4. Gas pressure spring (50) according to any of claims 1 to 3,
**characterized in that**
the seal (8) comprises a polyurethane and/or an acrylonitrile-butadiene rubber, preferably consists of a polyurethane or an acrylonitrile-butadiene rubber.

5. Gas pressure spring (50) according to any of claims 1 to 4,
**characterized in that**
the compensating piston (10) is in one piece.

6. Gas pressure spring (50) according to any of claims 1 to 5,
**characterized in that**
the compensating piston (10) comprises aluminum or a plastics material, preferably consists of aluminum or a plastics material.

7. Gas pressure spring (50) according to any of claims 1 to 6,
**characterized by**
a guide element (18) which movably guides the compensating piston (10) relative to the compensating cylinder (12) along the stroke axis (H), the guide element (18) preferably comprising a guide sleeve arranged in the projection (15) between the compensating cylinder (12) and the compensating piston (10).

8. Gas pressure spring (50) according to any of claims 1 to 7,
**characterized in that**
a. the compensating piston (10) comprises a cylinder jacket (10c) arranged in portions between the working cylinder (1) and the compensating cylinder,
b. the compensating piston (10) comprising a cylinder rim (10d) adjacent to the upper side (10a) and projecting radially to the stroke axis (H) beyond the cylinder jacket (10c),
c. the seal (8) being arranged on the cylinder rim (10d).

9. Gas pressure spring (50) according to any of claims 1 to 8,
**characterized in that**
a distance of the compensating cylinder (12) from the working cylinder (1), measured radially to the stroke axis (H), is greater in the stroke region (HB) than in an end region (EB) of the working cylinder (1) that lies between the stroke region (HB) and the open end (1b) of the working cylinder (1).

10. Gas pressure spring (50) according to claim 9,
**characterized in that**
an end region outer diameter (EAD) of the working cylinder (1), measured radially to the stroke axis (H), is larger than a stroke region outer diameter (HAD) of the working cylinder (1) in the stroke region (HB), measured radially to the stroke axis (H).

11. Gas pressure spring (50) according to any of claims 9 to 10,
**characterized in that**
the stroke region (HB) and the end region (EB) of the working cylinder (1) are integrally connected to one another.

12. Gas pressure spring (50) according to any of claims 1 to 11,
**characterized in that**
the working cylinder (1) in a sealing region (DB) between the stroke region (HB) and a piston rod end (1c) of the working cylinder (1) opposite the open end (1b) along the stroke axis (H), at which piston rod end a piston rod (6) attached to the working piston (2) emerges from the working cylinder (1), has a sealing region outer diameter (DAD), measured radially to the stroke axis (H), which is larger than the stroke region outer diameter (HAD) of the working cylinder (1).

13. Method for producing the gas pressure spring (50) according to any of claims 1 to 12,
**characterized by** the step of:
forming or machining a compensating piston blank into the compensating piston (10).

14. Method according to claim 13,
**characterized by** the steps of:
a. providing a working cylinder blank, the working cylinder blank being hollow cylindrical in shape and having an outer diameter transverse to the longitudinal axis that is independent of a position along the longitudinal axis of said blank, and
b. forming the working cylinder blank into the working cylinder (1) of the gas pressure spring (50),
c. the forming comprising expanding the outer diameter of the working cylinder blank in at least one end region of the working cylinder blank.

15. Method according to claim 14,
**characterized in that**
the expansion comprises inserting a mandrel into the at least one end region and preferably arranging a sleeve running around the longitudinal axis around the end region before inserting the mandrel, so that the end region rests against the sleeve after expansion.

## Revendications

1. Ressort à gaz (50), comprenant
a. un piston de travail (2) guidé de manière coulissante dans un cylindre de travail (1) le long d'un axe de levage (H) sur une plage de levage (HB),
b. un cylindre d'équilibrage (12) entourant le cylindre de travail (1) radialement par rapport à l'axe de levage (H), et
c. un piston d'équilibrage (10) guidé de manière coulissante dans le cylindre d'équilibrage (12) le long de l'axe de levage (H) et de forme cylindrique creuse,
d. dans lequel le cylindre de travail (1) présente une extrémité ouverte (1b) le long de l'axe de levage (H),
e. dans lequel le cylindre d'équilibrage (12) forme, au niveau de l'extrémité ouverte (1b), une saillie (15) au-dessus du cylindre de travail (1) et comportant une extrémité fermée (15b) le long de l'axe de levage (H),
f. dans lequel le piston d'équilibrage (10)
i. sépare de manière étanche aux gaz un espace de travail (1a) disposé dans le cylindre de travail (1), un espace d'équilibrage (12a) disposé entre le cylindre de travail (1) et le cylindre d'équilibrage (12) et un espace de rappel (15a) disposé dans la saillie (15), et
ii. est ouvert au niveau d'un côté supérieur (10a) du piston d'équilibrage (10) orienté vers l'espace de travail (1a),
**caractérisé par**
g. un joint d'étanchéité (8) disposé sur le côté supérieur (10a) du piston d'équilibrage (10), lequel joint d'étanchéité assure l'étanchéité du piston d'équilibrage (10) par rapport au cylindre de travail (1) et au cylindre d'équilibrage (12).

2. Ressort à gaz (50) selon la revendication 1,
**caractérisé en ce que**
le piston d'équilibrage (10) est rendu étanche exclusivement par le joint d'étanchéité (8) par rapport au cylindre de travail (1) et au cylindre d'équilibrage (12).

3. Ressort à gaz (50) selon la revendication 1 ou 2,
**caractérisé en ce que**
le joint d'étanchéité (8) comprend une bague d'étanchéité tournant autour de l'axe de levage (H), de préférence est une bague d'étanchéité tournant autour de l'axe de levage (H).

4. Ressort à gaz (50) selon l'une des revendications 1 à 3,
**caractérisé en ce que**
le joint d'étanchéité (8) comprend un polyuréthane et/ou un caoutchouc acrylonitrile-butadiène, de préférence est constitué d'un polyuréthane ou d'un caoutchouc acrylonitrile-butadiène.

5. Ressort à gaz (50) selon l'une des revendications 1 à 4,
**caractérisé en ce que**
le piston d'équilibrage (10) est d'un seul tenant.

6. Ressort à gaz (50) selon l'une des revendications 1 à 5,
**caractérisé en ce que**
le piston d'équilibrage (10) comprend de l'aluminium ou une matière plastique, de préférence est constitué d'aluminium ou d'une matière plastique.

7. Ressort à gaz (50) selon l'une des revendications 1 à 6,
**caractérisé par**
un élément de guidage (18) qui guide de manière coulissante le piston d'équilibrage (10) par rapport au cylindre d'équilibrage (12) le long de l'axe de levage (H), dans lequel l'élément de guidage (18) comprend de préférence une douille de guidage disposée dans la saillie (15) entre le cylindre d'équilibrage (12) et le piston d'équilibrage (10).

8. Ressort à gaz (50) selon l'une des revendications 1 à 7,
**caractérisé en ce que**
a. le piston d'équilibrage (10) comprend une enveloppe de cylindre (10c) disposée dans certaines sections entre le cylindre de travail (1) et le cylindre d'équilibrage,
b. dans lequel le piston d'équilibrage (10) comprend un rebord de cylindre (10d) adjacent au côté supérieur (10a) et faisant saillie radialement par rapport à l'axe de levage (H) au-delà de l'enveloppe de cylindre (10c),
c. dans lequel le joint d'étanchéité (8) est disposé sur le rebord de cylindre (10d).

9. Ressort à gaz (50) selon l'une des revendications 1 à 8,
**caractérisé en ce que**
une distance entre le cylindre d'équilibrage (12) et le cylindre de travail (1), mesurée radialement par rapport à l'axe de levage (H), est plus grande dans la plage de levage (HB) que dans une plage d'extrémité (EB) du cylindre de travail (1) située entre la plage de levage (HB) et l'extrémité ouverte (1b) du cylindre de travail (1).

10. Ressort à gaz (50) selon la revendication 9,
**caractérisé en ce que**
un diamètre extérieur de plage d'extrémité (EAD) du cylindre de travail (1), mesuré radialement par rapport à l'axe de levage (H), est supérieur à un diamètre extérieur de plage de levage (HAD) du cylindre de travail (1), mesuré radialement par rapport à l'axe de levage (H), dans la plage de levage (HB).

11. Ressort à gaz (50) selon l'une des revendications 9 à 10,
**caractérisé en ce que**
la plage de levage (HB) et la plage d'extrémité (EB) du cylindre de travail (1) sont reliées entre elles d'un seul tenant.

12. Ressort à gaz (50) selon l'une des revendications 1 à 11,
**caractérisé en ce que**
le cylindre de travail (1) présente, dans une plage d'étanchéité (DB) entre la plage de levage (HB) et une extrémité de tige de piston (1c) du cylindre de travail (1) opposée à l'extrémité ouverte (1b) le long de l'axe de levage (H), extrémité de tige de piston au niveau de laquelle une tige de piston (6) fixée au piston de travail (2) sort du cylindre de travail (1), un diamètre extérieur de plage d'étanchéité (DAD) mesuré radialement par rapport à l'axe de levage (H) plus grand que le diamètre extérieur de plage de levage (HAD) du cylindre de travail (1).

13. Procédé de fabrication du ressort à gaz (50) selon l'une des revendications 1 à 12,
**caractérisé par** l'étape consistant à :
façonner ou usiner par enlèvement de copeaux une ébauche de piston d'équilibrage pour former le piston d'équilibrage (10).

14. Procédé selon la revendication 13,
**caractérisé par** les étapes consistant à :
a. fournir une ébauche de cylindre de travail, dans lequel l'ébauche de cylindre de travail est de forme cylindrique creuse et possède un diamètre extérieur transversal à l'axe longitudinal et indépendant d'une position le long de son axe longitudinal, et
b. façonner l'ébauche de cylindre de travail en cylindre de travail (1) du ressort à gaz (50),
c. dans lequel le façonnage comprend un évasement du diamètre extérieur de l'ébauche de cylindre de travail dans au moins une plage d'extrémité de l'ébauche de cylindre de travail.

15. Procédé selon la revendication 14,
**caractérisé en ce que**
l'évasement comprend une insertion d'un mandrin dans l'au moins une plage d'extrémité et, de préférence, une disposition d'une douille tournant autour de l'axe longitudinal autour de la plage d'extrémité avant l'insertion du mandrin, de sorte que la plage d'extrémité est en contact avec la douille après l'évasement.
